# EUROPEAN PATENT APPLICATION

(11) **EP 1 793 143 A1**
(43) Date of publication of application: **06.06.2007**
(21) Application number: 05425857.9
(22) Date of filing: 01.12.2005
(51) Int. Cl.: F16H 55/22, F16D 7/02, F16H 55/17

(54) **Worm/Crown-wheel-assembly gear reducer comprising a torque limiter**

(71) Applicant: Bonfiglioli Riduttori S.p.A., 40012 Calderara di Reno (IT)
(72) Inventor: Lodola, Valerio, 47100 Forli' (IT); Trepiccione, Luca, 40139 Bologna (IT)
(74) Representative: Jorio, Paolo

(57) **Abstract**

A worm/crown-wheel-assembly gear reducer (1; 21) comprises a worm (4) and a crown-wheel assembly (6; 22). The crown-wheel assembly (6; 22) in turn comprises a crown wheel (8), a hub (9; 23) separate from the crown wheel (8), and a torque limiter (10; 24) designed to transmit the torque, or, once a given threshold value of the torque is exceeded, to cause the crown wheel (8) to slip with respect to the hub (9; 23). The torque limiter (10; 24) comprises:
- a first plurality of disks (11) connected mechanically to the crown wheel (8);
- a second plurality of disks (12) connected mechanically to the hub (9; 23), each disk (12) being set between two disks (11); and
- a plurality of springs (16) designed to compress between them the first plurality (11) and the second plurality (12) of disks.

## Description

The present invention relates to a worm/crown-wheel-assembly gear reducer comprising a torque limiter.

In order to transmit the motion between two mutually orthogonal axes, as is known, a motor reducer comprising a worm/crown-wheel-assembly gear reducer and a drive unit can be used. The worm is moved by an electric drive unit by means of a spindle that functions as connection.

In such a type of motor reducer, in the case where jamming of the shaft fixed to the crown-wheel assembly occurs, it is necessary for a torque limiter to go into action so as to prevent damage to the gear reducer.

There has thus been felt the need to make available a gear reducer the technical characteristics of which would be able to prevent any damage to the electric drive unit and to the gears once jamming of the crown-wheel assembly occurs.

Consequently, the subject of the present invention is a worm/crown-wheel assembly gear reducer comprising a torque limiter according to the characteristics specified in Claim 1.

In addition, according to a preferred embodiment of the present invention, the aforesaid torque limiter comprises a device for adjustment of the force of the elastic means present therein.

The ensuing examples have a purely illustrative and nonlimiting purpose in order to provide a better understanding of the invention with the aid of the annexed plate of drawings, wherein:
- Figure 1 is a cross-sectional view of a first embodiment of the gear reducer forming the subject of the present invention; and
- Figure 2 is a cross-sectional view of a second embodiment of the gear reducer forming the subject of the present invention.

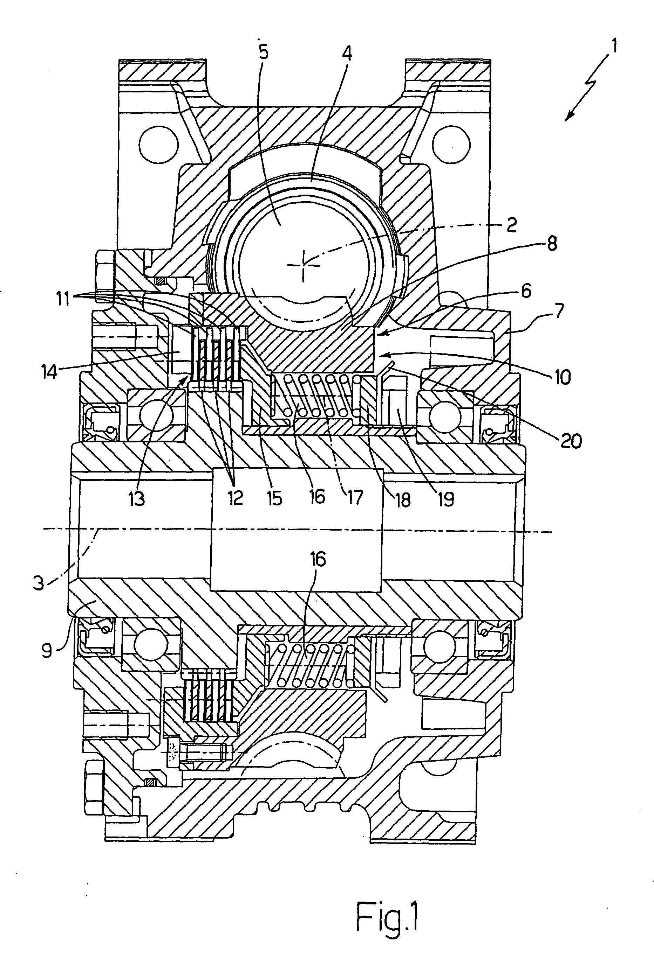

Designated as a whole by 1 in Figure 1 is a first preferred embodiment of the gear reducer forming the subject of the present invention.

The gear reducer 1 is designed to transmit a rotary motion between two mutually orthogonal axes 2 and 3 and comprises a worm screw 4 fitted on a shaft 5 sharing the axis 2, and a crown-wheel assembly 6 designed to rotate about the axis 3. The worm 4 and the crown-wheel assembly 6 are contained within a guard 7.

In turn, the crown-wheel assembly 6 comprises a crown wheel 8 and a hub 9 (both having the same axis 3), which is separate from the crown wheel 8.

The crown-wheel assembly 6 moreover comprises a torque limiter 10 designed to render the crown wheel 8 and the hub 9 fixed to one another during normal operation.

However, if the torque transmitted via the gear reducer 1 exceeds a certain pre-set value, a set of first elements of the torque limiter 10 slips with respect to a set of second elements (see hereinafter).

In fact, the torque limiter 10 comprises a plurality of steel disks 11 fitted mechanically to the crown wheel 8, and a plurality of sintered disks 12, which are fitted mechanically to the hub 9 and each of which is set between two steel disks 11. Both the steel disks 11 and the sintered disks 12 have a central hole within which the hub 9 is housed. The fits between the steel disks 11 and the crown wheels 8, and, respectively, between the sintered disks 12 and the hub 9 are of a traditional type (with splined shaft) known in the sector of production of clutches.

When the two types of disks 11 and 12 are packed against one another to form a pack 13 of disks, the motion of the crown wheel 8 is transmitted to the hub 9.

The torque limiter 10 comprises a contrast ring 14, which is set around the hub 9 and on which there rests the pack of disks 13 compressed against one another, and a thrust piston 15, which is also set around the hub 9 and which acts on the pack 13 of disks on the side opposite to the contrast ring 14. Furthermore, the torque limiter 10 comprises a plurality of helical springs 16, which are arranged with their own axis 17 parallel to the axis 3 of the hub 9 and only two of which are visible in Figure 1.

The helical springs 16 are compressed between the thrust piston 15 and a thrust ring 18, which is set around the hub 9 and the position of which determines compression of the springs 16 themselves. In other words, the springs 16 exert a thrust on the thrust piston 15, which in turn compacts the pack 13 of disks against the contrast ring 14.

The torque limiter 10 moreover comprises a ring nut 19, the movement of which determines the position of the thrust ring 18, and a lock washer 20 set between the thrust ring 18 and the ring nut 19 and designed to guarantee maintenance of the position of the thrust ring 18 itself as set by use of the ring nut 19. Both the ring nut 19 and the lock washer 20 are arranged around the hub 9. In particular, the ring nut 19 by means of the lock washer 20 exerts a thrust on the thrust ring 18, which in turn compresses the springs 16.

As may emerge obvious to a person skilled in the branch, once a given value of the transmitted torque is exceeded, there occurs slipping of the pack 13 of disks, which is opposed by the action of the springs 16. In fact, in the case where a jamming of the hub 9 occurs, the amount of the torque would reach the minimum threshold that enables the action of slipping to overcome the action of the springs 16 and hence separate the two types of disks 11 and 12 from one another, consequently interrupting the connection between the crown wheel 8 and the hub 9 itself.

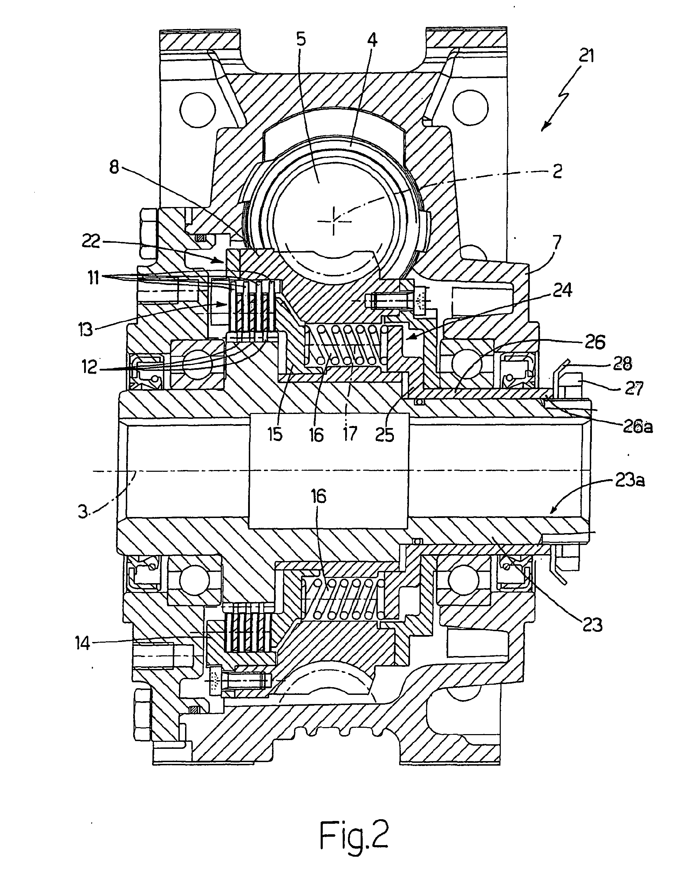

Designated as a whole by 21 in Figure 2 is a second preferred embodiment of the gear reducer forming the subject of the present invention.

The parts of the gear reducer 21 identical to those of the gear reducer 1 will be designated by the same reference numbers and will not be described again.

The gear reducer 21 comprises a crown-wheel assembly 22, which in turn comprises a hub 23, an end portion of which 23a extends out of the guard 7. The crown-wheel assembly 22 moreover comprises a torque limiter 24 having a thrust ring 25 with a sleeve portion 26, an end portion 26a of which extends out of the guard 7 in a position corresponding to the end portion 23a of the hub 23.

The torque limiter 24 moreover comprises: a ring nut 27, which is set around the end portion 23a of the hub 23 (and which can be screwed on a thread provided on the end portion 23a) and movement of which determines the position of the thrust ring 25; and a lock washer 28 set between the thrust ring 25 and the ring nut 27 and designed to guarantee maintenance of the position of the thrust ring 25 itself as set by use of the ring nut 27.

The gear reducer 21, as compared to the gear reducer 1, affords the advantage of being able to set the position of the thrust ring 25 without being forced to dismantle the guard 7. In fact, the sleeve portion 26 constitutes an extension of the thrust ring 25 on the outside of the guard 7, with the possibility of regulating its position and hence compression of the springs 16 from outside.

## Claims

1. A worm/crown-wheel-assembly gear reducer (1; 21) comprising a worm (4) fitted on a first shaft (5) having a respective axis of symmetry (2) and a crown-wheel assembly (6; 22) designed to be fitted on a hub (9; 23) having a respective second axis (3) perpendicular to said first axis of symmetry (2); said crown-wheel assembly (6; 22) comprising a crown wheel (8), a hub (9; 23) separate from said crown wheel (8), and a torque limiter (10; 24) designed to transmit the torque, or, once a given threshold value of the torque is exceeded, to cause said crown wheel (8) to slip with respect to said hub (9; 23); said gear reducer (1; 21) being **characterized in that** said torque limiter (10; 24) comprises:
- a first plurality of disk elements (11) connected mechanically to said crown wheel (8);
- a second plurality of disk elements (12) connected mechanically to said hub (9; 23), each disk element (12) being set between two disk elements (11); and
- elastic means (16) designed to compress between them said first plurality (11) and said second plurality (12) of disk elements.

2. The gear reducer according to Claim 1, **characterized in that** said disk elements (11, 12) have a central hole within which said hub (9; 23) is housed.

3. The gear reducer according to Claim 2, **characterized in that** said torque limiter (10; 24) comprises a contrast ring (14) and a thrust piston (15) arranged around said hub (9; 23) and designed to compress on opposite sides said first plurality (11) and said second plurality (12) of disk elements, said elastic means (16) acting on said thrust piston (15).

4. The gear reducer according to Claim 3, **characterized in that** said torque limiter (10; 24) comprises means (18, 19; 25, 27) for adjustment of the force exerted by said elastic means (16) .

5. The gear reducer according to Claim 4, **characterized in that** said torque limiter (10; 24) comprises a thrust ring (18; 25) set around said hub (9; 23) and a ring nut (19; 27) set around said hub (9; 23) and designed to determine the position of said thrust ring (18; 25), said elastic means (16) being compressed between said thrust piston (15) and said thrust ring (18; 25).

6. The gear reducer according to Claim 5, **characterized in that** an appendage (26a) of a sleeve portion (26) of said thrust piston (25) and said ring nut (27) are arranged on the outside of a guard (7) in which said worm (4) and said crown wheel (8) are contained.

7. The gear reducer according to any one of the preceding claims **characterized in that** said elastic means comprise a plurality of helical springs (16).

8. A motor reducer **characterized in that** it comprises a gear reducer as claimed in any one of the preceding claims.
